Europäisches Patentamt

European Patent Office

Office européen des brevets

(19)

(11) **EP 1 196 454 B1**

(12) **EUROPEAN PATENT SPECIFICATION**

(45) Date of publication and mention
of the grant of the patent:
**16.11.2005 Bulletin 2005/46**

(51) Int Cl.7: **C08F 4/651**, C08F 4/654,
C08F 4/657, C08F 210/16,
C08F 10/06

(21) Application number: **00943316.0**

(22) Date of filing: **29.06.2000**

(86) International application number:
**PCT/US2000/018008**

(87) International publication number:
**WO 2001/000687 (04.01.2001 Gazette 2001/01)**

(54) **MAGNESIUM/TITANIUM ALKOXIDE COMPLEXES AND POLYMERIZATION CATALYSTS MADE THEREFROM**

MAGNESIUM/TITAN-ALKOXIDKOMPLEXE UND DARAUS HERGESTELLTE
POLYMERISATIONSKATALYSATOREN

COMPLEXES D'ALCOXYDES DE MAGNESIUM/TITANE ET CATALYSEURS DE
POLYMERISATION PREPARES A PARTIR DE CES COMPLEXES

(84) Designated Contracting States:
**AT BE CH CY DE DK ES FI FR GB GR IE IT LI LU
MC NL PT SE**

(30) Priority: **30.06.1999 US 345082**

(43) Date of publication of application:
**17.04.2002 Bulletin 2002/16**

(73) Proprietor: **UNION CARBIDE CHEMICALS &
PLASTICS TECHNOLOGY CORPORATION
Danbury, Connecticut 06817-0001 (US)**

(72) Inventor: **JOB, Robert, Charles
Boundbrook, NJ 08805 (US)**

(74) Representative: **Burford, Anthony Frederick et al
Beck Greener
Fulwood House
12 Fulwood Place
London WC1V 6HR (GB)**

(56) References cited:
| | |
|---|---|
| **WO-A-93/00372** | **FR-A- 2 708 271** |
| **US-A- 4 902 761** | **US-A- 5 034 361** |
| **US-A- 5 082 907** | |

EP 1 196 454 B1

**Description**

***BACKGROUND OF THE INVENTION***

1. Field of the Invention

The present invention relates to magnesium and titanium-containing olefin polymerization procatalyst precursors, procatalysts made from the precursors, and their use as a catalyst component for the polymerization of olefin monomers. The precursor complexes are prepared by reacting a magnesium alkoxide and a titanium alkoxide in the presence of a clipping agent to form a solid complex. The solid complex then can be used to form a procatalyst by contacting it with a chlorinating agent and optionally an electron donor. The procatalyst then can be converted to an olefin polymerization catalyst by contacting it with a cocatalyst and optionally a selectivity control agent.

2. Description of Related Art

Polymers and copolymers of lower $\alpha$-olefins, particularly, ethylene, propylene and butylene are widely used throughout the world. These polymeric products are relatively inexpensive to manufacture, and they exhibit a number of commercially useful properties. These polymers are most commonly utilized in the form of highly crystalline solids. During the polymerization process, whether it be by liquid pool, gas phase, slurry phase or any other commonly utilized process, it is beneficial for the polymer particles (and consequently the catalyst particles) to be of a satisfactory shape and size. As examples: denser particles allow for higher hourly production rates; spheroidal particles allow for higher polymer bulk density; narrow particle size distribution allows for better gas phase fluidization. Overly small catalyst and polymer particles (commonly called fines) are also undesirable.

When ethylene is polymerized, the process is less complicated than with higher olefins in that the product type is not greatly influenced by the manner in which the ethylene molecules add to the growing polymeric chain during polymerization. The polymeric product of ethylene does not generally exist in stereoisomeric forms. The simpler catalysts required to effect this polymerization can normally be obtained by straightforward chlorination of a catalyst precursor. If the shape of the catalyst particle and thus the shape of the resulting polymer particle is of importance, the catalyst precursor must be sufficiently robust so that it can withstand the rigors of this chlorination step.

When propylene is polymerized, however, the presence of pendant methyl groups on the polymeric chain provides a possibility of several product types, depending on the steric regularity with which propylene molecules add to the growing chain. Much if not most of the commercial polypropylene results from the stereoregular addition of propylene molecules in a regular head-to-tail manner. The form of polymer having a substantial proportion of random addition of propylene units is termed atactic and this amorphous form is less desirable. If present in a significant proportion, the atactic polymer must be removed through an extraction process to provide a more desirable crystalline material.

These polymers typically are formed by using a polymerization catalyst. The activity of the catalyst is significant in that the more polymer produced per unit weight of catalyst the better. The early titanium, chromium or vanadium catalysts were of low activity and the product contained a significant proportion of catalyst residues. These residues had to be removed in an effort to obtain commercially satisfactory properties.

More recent titanium-based olefin polymerization catalysts are stereoregulating and have sufficient activity to avoid extraction and deashing. These high activity catalysts typically are prepared *via* a multi-step chlorination of a magnesium containing precursor, in the presence of an electron donor compound, to form a solid procatalyst that usually contains magnesium, titanium and halide moieties, and comprise additionally a cocatalyst (usually an organoaluminum compound) and an optional selectivity control agent (SCA) for propylene polymerization. The magnesium containing complex is typically referred to as a "precursor", the solid titanium-containing compound typically is referred to as a "procatalyst", the organoaluminum compound, whether complexed or not, usually is referred to as the "cocatalyst" and the third component external electron donor, whether used separately or partially or totally complexed with the organoaluminum compound, is referred to as the "selectivity control agent." Throughout this disclosure, these terms will be used in accordance with the aforementioned designations. As before, if the shape of the catalyst particle and thus the shape of the resulting polymer particle is of importance, the catalyst precursor must be sufficiently robust so that it can withstand the rigors of the niulti-step chlorination process.

Many chemical combinations of procatalysts, cocatalysts and selectivity control agents are known in the art to produce active catalysts. Through considerable experience, however, certain materials are of greater interest than others. For example, there is significant research in the area of procatalysts, which typically contain some chemical combination of magnesium, titanium tetrachloride and an internal electron donor. These internal electron donors usually are oxygen containing compounds such as tetrahydrofuran and aromatic esters such as ethyl benzoate or ethyl p-toluate. Conventional cocatalysts include an aluminum trialkyl such as triethylaluminum or triisobutylaluminum that is often complexed with a portion of the selectivity control agent (or external electron donor), which also is typically an aromatic ester or an organosilane. Although variations in any of these catalyst components will influence the performance of the resultant catalyst, the component that appears to offer the greatest opportunity for modification to produce greater catalyst activity is the procatalyst.

The literature is rife with disclosures relating to the various known methods of preparing procatalysts. For example, Kioka, *et al.*, U.S. Patent No. 4,330,649, the disclosure of which is incorporated by reference herein in its entirety, describes a solid catalyst component (procatalyst) that is prepared by heating a soluble magnesium compound such as magnesium chloride with a higher alcohol in the presence of an ester to produce a solution. This solution contains a "precursor" of the procatalyst, which then is added to titanium tetrachloride and an electron donor (internal) to form the procatalyst. A number of United States patents issued to Robert C. Job (and Robert C. Job, *et al.*,) describe various mechanisms for preparing magnesium-containing, titanium-containing compounds that are useful as precursors for the production of procatalysts that are ultimately useful in preparing catalysts for the polymerization of $\alpha$-olefins. For example, U.S. Patent Nos. 5,034,361; 5,082,907; 5,151,399; 5,229,342; 5,106,806; 5,146,028; 5,066,737; 5,124,298, and 5,077,357, the disclosures of which are incorporated by reference herein in their entirety, disclose various procatalyst precursors. U.S. Patent No. 5,034,361 discloses solubilizing a magnesium alkoxide in an alkanol solvent by interaction of the magnesium alkoxide compound and certain acidic materials. This magnesium alkoxide then can be used either directly as a magnesium-containing catalyst precursor, or can be reacted with various titanium compounds to produce a magnesium and titanium-containing catalysts precursor.

U.S. Patent Nos. 5,082,907; 5,151,399; 5,229,342; 5,106,806; 5,146,028; 5,066,737; 5,124,298, and 5,077,357 disclose various magnesium and titanium-containing catalyst precursors, some of which are prepared by using the aforementioned magnesium alkoxide as a starting material. These precursors are not active polymerization catalysts, and they do not contain any effective amounts of electron donor. Rather, the precursors are used as starting materials in a subsequent conversion to an active procatalyst. Magnesium and titanium-containing procatalysts are formed either by straight forward chlorination of the magnesium and titanium-containing precursor or by reacting the magnesium and titanium-containing precursor with a tetravalent titanium halide, an optional hydrocarbon and an optional electron donor. The resulting procatalyst solid then is separated from the reaction slurry (by filtration, precipitation, crystallization, and the like). These procatalysts then are converted to polymerization catalysts by reaction with, for example, an organoaluminum compound and a selectivity control agent. U.S. Patent Nos. 5,122,494 and 5,371,157 disclose treating those various magnesium and titanium-containing catalyst precursors with ethylaluminum dichloride or diethylaluminum chloride, as chlorinating agents, to obtain procatalysts. Those procatalysts are then converted to polymerization catalysts by reaction with, for example, an organoaluminum compound and a selectivity control agent.

When magnesium alkoxides, such as magnesium ethoxide, are used as the starting materials to form the procatalyst precursor, a clipping agent usually is needed to break up the polymeric magnesium ethoxide and allow its reaction with the other components. As disclosed in U.S. Patent Nos. 5,124,298 and 5,077,357, the precursor is prepared by using chlorobenzene as a solvent and o-cresol as a clipping agent to chemically break down the polymeric magnesium ethoxide. Besides being a physiological irritant, small amounts of o-cresol (1 - 3%) remain in the precursor product and, unless leached efficiently by catalyst preparation steps, remain as a polymerization catalyst poison. It is desirable to find more benign clipping agents which are neither irritating to those who prepare the catalyst nor poisonous to polymerization catalysts. Furthermore, in light of environmental protection regulations, it is desirable to develop precipitation metathesis procedures which will utilize solvents other than chlorinated and/or aromatic hydrocarbons.

In addition to clipping agents described in the aforementioned patents to Job which include physiologically irritating phenolic compounds such as p-cresol, 3-methoxyphenol, 4-dimethylaminophenol, etc., certain agents are known to dissolve magnesium alkoxides such as magnesium ethoxide, but these agents typically are employed in very large excess and usually in the presence of aliphatic, aromatic and/or halogenated hydrocarbon solvents.

Other mechanisms are known in the art to solubilize magnesium alkoxides, but these methods often only prepare a magnesium halide support upon which a titanium compound is supported to form a procatalyst thereby requiring significant amounts of titanium halide during preparation of the procatalyst. In addition, many methods that describe the use of borate-containing solubilizing agents dissolve entirely the magnesium alkoxide so that the reaction of the magnesium compound takes place in the liquid phase. This process is complicated by requiring a precipitating agent to precipitate the solid product, and expensive and inefficient since some of the raw materials are lost due to solubilization.

### SUMMARY OF THE INVENTION

Thus, there exists a need to develop a procatalyst precursor which can be converted to an olefin polymerization catalyst capable of producing polymers in high yield, low fines, improved average particle size and increased bulk density. There also exists a need to provide a method of making a substantially spheroidal procatalyst precursor having improved morphology which does not involve the use of harmful solvents and irritating clipping agents. In addition, there exists a need to develop a method of making a procatalyst precursor that produces a precursor that does not contain even trace amounts of catalyst poison, such as o-cresol, and the like.

There also exists a need to develop a procatalyst precursor that already contains a catalytically active metal prior to formation of the procatalyst, and hence, can be contacted with significantly less active metal-containing species (i.e., tetravalent titanium halide) during preparation of the solid procatalyst component. A need also exists for a method of making a procatalyst precursor that does not require use of a precipitating agent to precipitate the magnesium-containing precursor because the magnesium compounds are not fully dissolved at any time during the method.

In accordance with these and other features of the invention, there is provided a method of making an olefin polymerisation procatalyst precursor comprising:

contacting a magnesium alkoxide and a titanium alkoxide in the presence of an alcohol and a clipping agent selected from the group consisting of HCHO, $CO_2$, $B(OEt)_3$, $SO_2$, $Al(OEt)_3$, $Si(OR)_4$, $R'Si(OR)_3$, $P(OR)_3$, and compounds comprising an anion corresponding to the formula, $CO_3^=$, $Br^-$, or $(O_2COEt)^-$, said R and R' each independently representing a hydrocarbyl group having from 1-10 carbon atoms, in an amount less than that required to completely dissolve the magnesium alkoxide, said amount being from 0.01 to 0.15 moles per mole of magnesium alkoxide, and

separating the resulting compound from the slurry.

In accordance with an additional feature of the present invention, there is provided a procatalyst precursor prepared by the above-mentioned process, that does not contain physiologically irritating chemicals and/or catalyst poisons, whereby the precursor contains an active titanium metal and has improved morphology when compared to conventional procatalyst precursors. In accordance with yet another feature of the present invention, there is provided a procatalyst prepared by reacting the above-mentioned precursor with an appropriate halogenating agent, and optional electron donor, where the procatalyst, when converted to a catalyst and used to polymerize at least one olefin, has improved catalytic activity and yields polymer having narrower particle size distribution and less fines when compared to conventional magnesium and titanium-containing procatalysts.

The invention also provides a high activity olefin polymerization procatalyst that comprises: (i) the procatalyst precursor comprising magnesium and titanium as described above; (ii) an electron donor; (iii) a halide of tetravalent titanium; and (iv) optionally, a hydrocarbon. The invention additionally provides a high activity olefin polymerization catalyst that comprises: (i) the above-described procatalyst; (ii) an organoaluminum cocatalyst; and (iii) a selectivity control agent. The invention also provides methods of making each of the above-described precursors, procatalysts and catalysts. In addition, the invention provides methods of polymerizing olefins (homopolymers, copolymers, terpolymers, etc.) by contacting an olefin monomer (or monomers) with the above-described high activity olefin polymerization.

These and other features of the present invention will be readily apparent to those skilled in the art upon reading the detailed description that follows.

### DESCRIPTION OF PREFERRED EMBODIMENTS

Throughout this description, the expression "clipping agent" denotes a species that is capable of assisting in the breakup of a polymeric magnesium alkoxide. Specifically, clipping agents include: (i) those species which, in large excess are capable of dissolving magnesium alkoxides; (ii) large anions; and (iii) those that prevent magnesium alkoxides from polymerizing.

Throughout this description the term "precursor" and the expression "procatalyst precursor" denote a solid material that contains magnesium and titanium, but does not contain an electron donor, and which can be converted to a "procatalyst" (defined below) by contacting it with a halogenating agent such as alkylaluminum halide or tetravalent titanium halide (preferably $TiCl_4$) and optionally an electron donor. Throughout this description, the term "procatalyst" denotes a solid material that is an active catalyst component, and that can be converted to a polymerization catalyst by contact with an organoaluminum compound (preferably triethyl aluminum (TEAL)), and an optional external donor, or selectivity control agent.

The invention relates to the formation of a magnesium and titanium-containing alkoxide complex that is a precursor of a procatalyst component of a high activity olefin polymerization catalyst. The complex is produced by contacting a magnesium alkoxide, a titanium alkoxide, a clipping agent and an alcohol. Preferably the complex precipitates as a granular product from the mixture at the same time as dissolution of the starting magnesium alkoxide so that a material of homogeneous chemical composition is formed. Within the range of stoichiometries outlined in the present invention, substantially spheroidal magnesium and titanium-containing precursor particles are formed. The expression "substantially spheroidal" denotes particles whereby the regular geometrical shape which would completely encompass the particle with the minimum of void space, is a sphere. Thus the particles range from those which under microscopic examination appear to be smooth spheres to those which appear spherical but have rough surfaces to those which appear to have crystalline clumps protruding from a spherical surface. Although it is not critical to the basic operation of the process, the alcohol can be removed from the system by evaporation in order to cause precipitation of additional small amounts of complex which may remain in solution.

The precursor particles then can be separated from the mixture by filtration, and the like, dried, and then used to form a polymerization procatalyst by contact with a halogenating agent and optionally an internal electron donor. Because the precursor already contains active metal species, it is not necessary that the halogenating agent be a transition metal halide. Preferably, the precursor is contacted with a halogenating agent (e.g. ethylaluminum dichloride or diethylaluminum chloride or titanium tetrachloride) in an amount such that the equivalents of available halide are about 2 to 4 times the sum of 2 times the magnesium equivalents + 4 times the titanium equivalents, established by elemental analysis to be contained in the precursor. This pmcatalyst then can be contacted with a cocatalyst and an optional selectivity control agent (or external electron donor) to provide an olefin polymerization catalyst.

Any magnesium alkoxide can be used in the present invention as a starting material for the magnesium and titanium-containing precursor. Preferably, the magnesium alkoxide is a magnesium dialkoxide where each alkoxide may be the same or different, and wherein each alkoxide contains anywhere from 1 to 10 carbon atoms, preferably, from 1 to 5 and most preferably from 1-4 carbon atoms.

Any titanium alkoxide can be used in the present invention as a starting material for the magnesium and titanium-containing precursor. Preferably, the titanium alkoxide is a titanium tetraalkoxide where each alkoxide may be the same or different, and wherein each alkoxide contains anywhere from 1 to 10 carbon atoms, preferably, from 1 to 5 and most preferably from 1-4 carbon atoms. If other titanium species are added during formation of the precursor (*e.g.*, $TiCl_4$), then the total amount of titanium compounds used preferably is much less than the amount which would be required to fully dissolve the magnesium alkoxide. It is preferred to use anywhere from about 0.133 mole to about 0.67 mole of titanium compound (a mole of titanium compound denoting a mole of the total titanium species) per mole of magnesium compound, (a mole of magnesium compound denoting a mole of the total magnesium species). More preferably, anywhere from about 0.2 mole to about 0.5 mole, and most preferably, from about 0.27 mole to about 0.4 mole of titanium compound is used per mole of magnesium compound.

The alkoxide moieties within each reactant may be the same or different and the alkoxide moieties of one reactant may be the same or different from the alkoxide moieties of the other reactant. Although alkoxide moieties such as methoxide, ethoxide, propoxide, i-propoxide, n-butoxide are useful, the preferred alkoxides groups are methoxide and ethoxide, and the most preferred alkoxide group is ethoxide. In part for reasons of product purity and ease of handling, it is preferred that all alkoxide groups are ethoxide.

Clipping agents useful in the present invention include species which in large amounts will dissolve the magnesium alkoxide, large anions, and species that prevent the magnesium alkoxide from polymerizing. The clipping agents are selected from $HCHO$, $CO_2$, $B(OEt)_3$, $SO_2$, $Al(OEt)_3$, $Si(OR)_4$, $R'Si(OR)_3$, $P(OR)_3$, and compounds comprising an anion corresponding to the formula $CO_3^=$, $Br^-$, or $(O_2COEt)^-$. In the above compounds, R and R' represent hydrocarbon groups, preferably alkyl groups, containing from 1-10 carbon atoms, and preferably R and R' are the same or different and are methyl or ethyl.

The clipping agent is used in an amount less than that required to fully dissolve the magnesium alkoxide, said amount ranging from about 0.01 moles to about 0.15 moles, and most preferably from about 0.03 moles to about 0.15 moles per mole of magnesium compound. If a borate ester is used as the clipping agent, then significantly less clipping agent can be used, preferably on the order of less than 0.09 mole of clipping agent per mole of titanium compound.

Any alcohol or mixtures of alcohols can be used to prepare the magnesium and titanium-containing precursor. Preferably, the alcohol is an aliphatic alcohol, and more preferably, the alcohol is selected from methanol, ethanol, butanol, propanol, i-propyl alcohol, n-butyl alcohol, n-propyl alcohol, and mixtures thereof. Most preferably the alcohol is ethanol, butanol, and mixtures thereof.

The preferable relative molar amounts of reacting ingredients utilized to form the magnesium and titanium-containing precursor of the present invention is more appropriately represented by the following formula

$$\{a Mg(OR)_2 + b MgCl_2 + c MgX_pY_q\}$$

$$a + b + c = 3$$
$$R, R', R'' = 1 \text{ to } 10 \text{ carbon residue or mixture}$$
$$X = \text{halide or alkoxide}$$
$$Y = \text{halide or alkoxide or clipper anion}$$

$$+$$

$$\{d Ti(OR')_4 + e TiCl_4 + f TiZ_4\}$$

$$0.4 < d + e + f < 2$$
$$0.8 < d + e + f < 1.2 \text{ is preferred}$$
$$Z = \text{halide, alkoxide, amide or mixture}$$

$$+$$

$$g \text{Clipper}$$

$$0.1 < g < 0.4 \text{ is preferred}$$

$$+$$

$$h R''OH$$

$$R''OH \text{ is a single alcohol or a mixture}$$
$$0.5 < h < 8$$

The magnesium-containing components are preferably slurried first in a suitable solvent. Any non-reactive solvent capable of slurrying the magnesium components can be used in the invention. Suitable solvents include pentane, octane, decalin (decahydronaphthalene) benzene, toluene, xylene, alkylbenzenes, methylene chloride, methylene bromide, chloroform, carbon tetrachloride, 1,2-dibromoethane, 1,1,2-trichloroethane, trichlorocyclohexane, dichlorofluoromethane and tetrachlorooctane, chlorobenzene, bromobenzene, dichlorobenzene, chlorotoluene, carbon tetrachloride and 1,1,2-trichloroethane. The aromatic halohydrocarbon chlorobenzene is particularly preferred.

After slurrying the magnesium components in a suitable solvent, the titanium components can be added with stirring followed by addition of alcohol. The particular order of mixing the magnesium, titanium and alcohol components is not critical. Titanium tetrachloride and other titanium-containing components then can be added to the mixture, or can be added initially to slurry the magnesium-containing components.

Upon contacting all of the components, the mixture then can be heated to anywhere from about 50°C to about 120°C by any suitable heating apparatus. The components are mixed at this elevated temperature for about 5 minutes to about 3 hours, preferably, from about 25 minutes to 2 hours, and most preferably from about 45 minutes to 1 ½ hours; such time to be determined by the disappearance of the original magnesium alkoxide reactant (so that at most only a few granules remain in solution) and the formation of a homogeneous slurry. In many cases the slurry will appear translucent to even clear. Those skilled in the art are capable of determining when the original magnesium alkoxide reactant has disappeared and/or when a homogeneous slurry has been formed, using the guidelines provided herein.

Upon forming the homogeneous slurry, the alcohol then is preferably removed from the solution by heating the solution at temperatures above 100°C, and/or passing nitrogen over the solution. Removal of alcohol enables the precipitation of additional magnesium and titanium-containing complex which may remain dissolved in solution (*i.e.,* solid precursor material) and results in enhanced yield of product. The solid complex then can be removed from the reaction mixture by conventional means.

Preferably, the solid precursor materials are separated from the reaction mixture by any suitable means, including but not limited to, decantation, filtration, centrifugation, and the like. More preferably, the solid material is filtered, most preferably under the impetus of pressure and/or temperature. The filtered solids then can be washed at least once with one or more solvents, including but not limited to monochlorobenzene, toluene, xylene, isopentane, isooctane, and the like. After separation from the mixture, (or mother liquor, and subsequent wash solvents), the solid procatalyst precursor preferably is dried. Drying typically is conducted by supplying dry, moisture-free inlet nitrogen at a temperature of about 25°C to about 45°C for anywhere from about 10 minutes to about 10 hours thereby resulting in a product that is substantially dry. Higher temperatures on the order of 50 to about 150°C can be used to dry the precursor in shorter periods of time.

Any mechanism can be used to carry out the drying of the present invention. For example, the filter cake could be dried by flowing a heated inert gas stream through the cake for the time period described above. Alternatively, the filter cake could be removed from the filter and then subsequently dried in a conventional drying apparatus using direct, indirect, infrared, radiant or dielectric heat. Any apparatus capable of drying solids at temperatures above about 25° can be used in accordance with the present invention. Particularly preferred drying apparatus include, but are not limited to, direct continuous dryers, continuous sheeting dryers, pneumatic conveying dryers, rotary dryers, spray dryers, through-circulation dryers, tunnel dryers, fluid bed dryers, batch through-circulation dryers, tray and compartment dryers, cylinder dryers, screw-conveyor dryers, drum dryers, steam-tube rotary dryers, vibrating-tray dryers, agitated pan dryers, freeze dryers, vacuum rotary dryers and vacuum-tray dryers. Most preferably, the solid precursor material is dried in a single or multiple-leaf combined filter and dryer. Those skilled in the art are capable of designing a suitable dryer and drying protocol to effect drying the precursor in accordance with the present invention.

The precursor of the present invention then can be immediately converted to a procatalyst by any suitable means known to the art described below, or it can be stored for later use or for shipment to a facility capable of converting the precursor to a procatalyst. Upon drying, the solid precursor material can be discharged by any suitable means to downstream processing.

Conversion of the dried procatalyst precursor to a procatalyst can be accomplished in any suitable manner. For example, the dried precursors of the invention can be converted to polymerization procatalyst by reaction with a tetravalent titanium halide, an optional hydrocarbon or halohydrocarbon and an electron donor. The tetravalent titanium halide is suitably an aryloxy- or alkoxy di- or trihalide such as diethoxytitanium dichloride, dihexyloxytitanium dibromide or diisopropoxytitaniumchloride or the tetravalent titanium halide is a titanium tetrahalide such as titanium tetrachloride or titanium tetrabromide. A titanium tetrahalide is preferred as the tetravalent titanium halide and particularly preferred is titanium tetrachloride. Suitable procatalyst preparation procedures are described in the aforementioned patents U. S. 5,124,298 and U.S. 5,132,263.

Because the magnesium and titanium-containing precursor already contains an active metal, reaction with the above-mentioned tetravalent titanium halide is not essential to the production of an active procatalyst. Instead, halogenation can be carried out by any of several means known to the art. These include but are not limited to treatment of the precursor with $SiCl_4$, $R_xAlCl_{3-x}$, $BCl_3$ and the like. Suitable procatalyst preparation procedures utilizing alkylaluminum halides are described in the aforementioned patents U.S. 5,122,494 and U.S. 5,371,157.

Any electron donor can be used in the present invention so long as it is capable of converting the precursor into a procatalyst. Suitable electron donors are those electron donors free from active hydrogens that are conventionally employed in the formation of titanium-based procatalysts. Particularly preferred electron donors include ethers, esters, amines, imines, nitriles, phosphines, stibines, dialkyoxy benzenes, and arsines. The more preferred electron donors, however, include esters and ethers, particularly alkyl esters of aromatic monocarboxylic or dicarboxylic acids and particularly aliphatic or cyclic ethers. Examples of such electron donors are methyl benzoate, ethyl benzoate, ethyl p-ethoxybenzoate, 1,2-dialkyoxy benzenes, ethyl p-methylbenzoate, diethyl phthalate, dimethyl naphthalene dicarboxylate, diisobutyl phthalate, diisopropyl terephthalate, diethyl ether and tetrahydrofuran. The electron donor is a single compound or is a mixture of compounds but preferably the electron donor is a single compound. Of the preferred electron donors, ethyl benzoate, 1,2-dialkoxy benzenes and diisobutyl phthalate are particularly preferred.

In a preferred embodiment, the mixture of procatalyst precursor, tetravalent titanium halide, electron donor and halohydrocarbon is maintained at an elevated temperature, for example, a temperature of up to about 150°C. Best results are obtained if the materials are contacted initially at or about ambient temperature and then heated. Sufficient tetravalent titanium halide is provided to convert at least a portion and preferably at least a substantial portion of the alkoxide moieties of the procatalyst precursor to halide groups. This replacement is conducted in one or more contacting operations, each of which is conducted over a period of time ranging from a few minutes to a few hours and it is preferred to have halohydrocarbon present during each contacting. Sufficient electron donor usually is provided so that the molar ratio of electron donor to the magnesium present in the solid procatalyst is from about 0.01:1 to about 1:1, preferably from about 0.05:1 to about 0.5:1. The final washing with light hydrocarbon produces a procatalyst that is solid and granular and when dried is storage stable provided that oxygen and active hydrogen compounds are excluded. Alternatively, the procatalyst is used as obtained from the hydrocarbon washing without the need for drying. The procatalyst thus produced is employed in the production of an olefin polymerization catalyst by contacting the procatalyst with a cocatalyst and a selectivity control agent.

The magnesium and titanium-containing procatalyst serves as one component of a Ziegler-Natta catalyst system where it is contacted with a cocatalyst and optionally, a selectivity control agent. The cocatalyst component employed in the Ziegler-Natta catalyst system may be chosen from any of the known activators of olefin polymerization catalyst systems employing a titanium halide, but organoaluminum compounds are preferred. Illustrative organoaluminum cocatalysts include trialkylaluminum compounds, alkyaluminum alkoxide compounds alkylaluminoxane compounds and alkylaluminum halide compounds in which each alkyl independently has from 2 to 6 carbon atoms inclusive. The preferred organoaluminum cocatalysts are halide free and particularly preferred are the trialkylaluminum compounds such Suitable organoaluminum cocatalysts include compounds having the formula $Al(R''')_dX_eH_f$ wherein: X is F, Cl, Br, I or OR'''', R''' and R'''' are saturated hydrocarbon radicals containing from 1 to 14 carbon atoms, which radicals may be the same or different, and, if desired, substituted with any substituent which is inert under the reaction conditions employed during polymerization, d is 1 to 3, e is 0 to 2, f is 0 or 1, and d+e+f=3. Such cocatalysts can be employed individually or in combination thereof and include compounds such as $Al(C_2H_5)_3$, $Al(C_2H_5)_2Cl$, $Al_2(C_2H_5)_3Cl_3$, $Al(C_2H_5)_2H$, $Al(C_2H_5)_2(OC_2H_5)$, $Al(i-C_4H_9)_3$, $Al(i-C_4H_9)_2H$, $Al(C_6H_{13})_3$ and $Al(C_8H_{17})_3$.

Preferred organoaluminum cocatalysts are triethylaluminum, triisopropylaluminum, triisobutylaluminum and diethylhexylaluminum. Triethylaluminum is a preferred trialkylaluminum cocatalyst. The organoaluminum cocatalyst, during formation of the olefin polymerization catalyst, is preferably employed in a molar ratio of aluminum to titanium of the procatalyst of from about 1:1 to about 150:1, but more preferably in a molar ratio of from about 10:1 to about 100:1.

The final component of the Ziegler-Natta catalyst system is the optional selectivity control agent (SCA), or external electron donor. Typical SCAs are those conventionally employed in conjunction with titanium-based procatalysts and organoaluminum cocatalysts. Illustrative of suitable selectivity control agents are those classes of electron donors employed in procatalyst production as described above as well as organosilane compounds including alkylalkoxysilanes and arylalkoxysilanes. Particularly suitable silicon compounds of the invention contain at least one silicon-oxygen-carbon linkage. Suitable silicon compounds include those having the formula $R^1{}_mSiY_nX_p$ wherein: $R^1$ is a hydrocarbon radical containing from 4 to 20 carbon atoms, Y is $-OR^2$ or $-OCOR^2$ wherein $R^2$ is a hydrocarbon radical containing from 1 to 20 carbon atoms, X is hydrogen or halogen, m is an integer having a value of from 0 to 3, n is an integer having a value of from 1 to 4, p is an integer having a value of from 0 to 1, and preferably 0, and m+n+p = 4. $R^1$ should be such that there is at least one non-primary carbon in the alkyl and preferably, that such non-primary carbon is attached directly to the silicon atom. Examples of $R^1$ include cyclopentyl, t-butyl, isopropyl or cyclohexyl. Examples of $R^2$ include ethyl, butyl, isopropyl, phenyl, benzyl and t-butyl. Examples of X are Cl and H.

Each $R^1$ and $R^2$ may be the same or different, and, if desired, substituted with any substituent which is inert under the reaction conditions employed during polymerization. Preferably, $R^2$ contains from 1 to 10 carbon atoms when it is aliphatic and may be sterically hindered or cycloaliphatic, and from 6 to 10 carbon atoms when it is aromatic. Silicon compounds in which two or more silicon atoms are linked to each other by an oxygen atom, i.e., siloxanes or polysiloxanes, may also be employed, provided the requisite silicon-oxygen-carbon linkage is also present. The preferred selectivity control agents are alkylalkoxysilanes such as ethyldiethoxysilane, diisobutyl dimethoxysilane, cyclohexylmethyldimethoxysilane, propyl trimethoxysilane, dicyclohexyl dimethoxysilane, and dicyclopentyl dimethoxysilane. In one modification, the selectivity control agent is a portion of the electron donor added during procatalyst production. In an alternate modification the selectivity control agent is provided at the time of the contacting of procatalyst and cocatalyst. In either modification, the selectivity control agent is provided in a quantity of from 0.1 mole to about 100 moles per mole of titanium in the procatalyst. Preferred quantities of selectivity control agent are from about 0.5 mole to about 25 mole per mole of titanium in the procatalyst.

The olefin polymerization catalyst can be produced by any known procedure of contacting the procatalyst, the cocatalyst and the selectivity control agent. The method of contacting is not critical. In addition, the catalyst components can be precontacted prior to polymerization to form a preactivated catalyst, or the components can be contacted with an olefin monomer to form a prepolymerized catalyst. In one modification, the catalyst components simply are mixed in a suitable reactor and the preformed catalyst thereby produced is introduced into the polymerization reactor when initiation of polymerization is desired. In an alternate modification, the catalyst components are introduced into the polymerization reactor where the catalyst is formed *in situ.*

The olefin polymerization catalyst may be used in slurry, liquid phase, gas phase and liquid monomer-type reaction systems as are known in the art for polymerizing olefins. Polymerization preferably is conducted in a fluidized bed polymerization reactor, however, by continuously contacting an alpha-olefin having 2 to 8 carbon atoms with the components of the catalyst system, *i.e*, the solid procatalyst component, cocatalyst and optional SCAs. In accordance with the process, discrete portions of the catalyst components can be continually fed to the reactor in catalytically effective amounts together with the alpha-olefin while the polymer product is continually removed during the continuous process. Fluidized bed reactors suitable for continuously polymerizing alpha-olefins have been previously described and are well known in the art. Fluidized bed reactors useful for this purpose are described, e.g., in U.S. Pat. Nos. 4,302,565, 4,302,566 and 4,303,771, the disclosures of which are incorporated herein by reference. Those skilled in the art are capable of carrying out a fluidized bed polymerization reaction using the guidelines provided herein.

It is preferred sometimes that such fluidized beds are operated using a recycle stream of unreacted monomer from the fluidized bed reactor. In this context, it is preferred to condense at least a portion of the recycle stream. Alternatively, condensation may be induced with a liquid solvent. This is known in the art as operating in "condensing mode." Operating a fluidized bed reactor in condensing mode generally is known in the art and described in, for example, U.S. Patent Nos. 4,543,399 and 4,588,790, the disclosures of which are incorporated by reference herein in their entirety. The use of condensing mode has been found to lower the amount of xylene solubles in isotactic polypropylene and improve catalyst performance when using the catalyst of the present invention.

The catalyst composition may be used for the polymerization of olefins by any suspension, solution, slurry, or gas phase process, using known equipment and reaction conditions, and is not limited to any specific type of reaction system. Generally, olefin polymerization temperatures range from about 0°C to about 200°C at atmospheric, subatmospheric, or superatmospheric pressures. Slurry or solution polymerization processes may utilize subatmospheric or superatmospheric pressures and temperatures in the range of about 40°C to about 110°C. A useful liquid phase polymerization reaction system is described in U.S. Patent 3,324,095. Liquid phase reaction systems generally comprise a reactor vessel to which olefin monomer and catalyst composition are added, and which contains a liquid reaction medium for dissolving or suspending the polyolefin. The liquid reaction medium may consist of the bulk liquid monomer or an inert liquid hydrocarbon that is nonreactive under the polymerization conditions employed. Although such an inert liquid hydrocarbon need not function as a solvent for the catalyst composition or the polymer obtained by the process, it usually serves as solvent for the monomers employed in the polymerization. Among the inert liquid hydrocarbons suitable for this purpose are isopentane, hexane, cyclohexane, heptane, benzene, toluene, and the like. Reactive contact between the olefin monomer and the catalyst composition should be maintained by constant stirring or agitation. The reaction medium containing the olefin polymer product and unreacted olefin monomer is withdrawn from the reactor continuously. The olefin polymer product is separated, and the unreacted olefin monomer and liquid reaction medium are recycled into the reactor.

Preferably, gas phase polymerization is employed, with superatmospheric pressures in the range of 1 to 1000, preferably 50 to 400 psi, most preferably 100 to 300 psi, and temperatures in the range of 30 to 130°C, preferably 65 to 110°C. Stirred or fluidized bed gas phase reaction systems are particularly useful. Generally, a conventional gas phase, fluidized bed process is conducted by passing a stream containing one or more olefin monomers continuously through a fluidized bed reactor under reaction conditions and in the presence of catalyst composition at a velocity sufficient to maintain a bed of solid particles in a suspended condition. A stream containing unreacted monomer is withdrawn from the reactor continuously, compressed, cooled, optionally fully or partially condensed as disclosed in U.S. Patent Nos. 4,528,790 and 5,462,999, and recycled to the reactor. Product is withdrawn from the reactor and make-up monomer is added to the recycle stream. As desired for temperature control of the system, any gas inert to the catalyst composition and reactants may also be present in the gas stream. In addition, a fluidization aid such as carbon black, silica, clay, or talc may be used, as disclosed in U.S. Patent No. 4,994,534.

Polymerization may be carried out in a single reactor or in two or more reactors in series, and is conducted substantially in the absence of catalyst poisons. Organometallic compounds may be employed as scavenging agents for poisons to increase the catalyst activity. Examples of scavenging agents are metal alkyls, preferably aluminum alkyls, most preferably triisobutylaluminum.

The precise procedures and conditions of the polymerization are broadly conventional but the olefin polymerization process, by virtue of the use therein of the polymerization catalyst formed from the solid precursor, provides polyolefin product having a relatively high bulk density in quantities that reflect the relatively high productivity of the olefin polymerization catalyst. In addition, the polymeric products produced in the present invention have a reduced level of fines.

Conventional additives may be included in the process, provided they do not interfere with the operation of the catalyst composition in forming the desired polyolefin.

When hydrogen is used as a chain transfer agent in the process, it is used in amounts varying between about 0.001 to about 10 moles of hydrogen per mole of total monomer feed. Also, as desired for temperature control of the system, any gas inert to the catalyst composition and reactants can also be present in the gas stream.

The polymerization product of the present invention can be any product, homopolymer, copolymer, terpolymer, and the like. Usually, the polymerization product is a homopolymer such as polyethylene or polypropylene, particularly polypropylene. Alternatively, the catalyst and process of the invention are useful in the production of copolymers including copolymers of ethylene and propylene such as EPR and polypropylene impact copolymers when two or more olefin monomers are supplied to the polymerization process. Those skilled in the art are capable of carrying out suitable polymerization of homopolymers, copolymers, terpolymers, etc., using liquid, slurry or gas phase reaction conditions, using the guidelines provided herein.

Ethylene polymers of the invention include ethylene homopolymers, and interpolymers of ethylene and linear or branched higher alpha-olefins containing 3 to about 20 carbon atoms, with densities ranging from about 0.90 to about 0.95 and melt indices of about 0.005 to 1000. Suitable higher alpha-olefins include, for example, propylene, 1-butene, 1-pentene, 1-hexene, 4-methyl-1-pentene, 1-octene, and 3, 5, 5-trimethyl 1-hexene. Cyclic olefins such as vinyl cyclohexane or norbornene may also be polymerized with the ethylene. Aromatic compounds having vinyl unsaturation, such as styrene and substituted styrenes, may also be included as comonomers. Particularly preferred ethylene polymers comprise ethylene and about 1 to about 40 percent by weight of one or more comonomers described above.

The invention will now be illustrated by examples exemplifying particularly preferred embodiments thereof. Those skilled in the art will appreciate that these examples do not limit the invention but rather serve to more fully describe particularly preferred embodiments.

**Glossary:**

MI is the melt index (optionally termed $I_2$), reported as grams per 10 minutes, determined in accordance with ASTM D-1238, condition E, at 190°C.

FI is the flow index (optionally termed $I_{21}$), reported as grams per 10 minutes, determined in accordance with ASTM D-1238 condition F, and was measured at ten times the weight used in the melt index test.

MFR is the melt flow ratio, which is the ratio of flow index to melt index. It is related to the molecular weight distribution of the polymer.

Productivity is given in Kg polymer/g procatalyst/hour/100 psi ethylene.

Examples:

## Example 1

Preparation of magnesium and titanium-containing precursor using mixed alcohols:

Reaction Stoichiometry:

$$2.85 \, Mg(OEt)_2 + 0.42 \, TiCl_4 + 0.68 \, Ti(OEt)_4 + 0.15 \, Mg(O_2COET)(OEt) + 3.4 \, ROH \cdots\cdots>$$

Approximately 8.15 g $Mg(OEt)_2$ (71.2 mmol) and 0.6 g magnesium ethyl carbonate (3.8 mmol) were mixed together with 100 gm of chlorobenzene (90 ml), in an 8 ounce bottle, and then 4.11 g of $Ti(OEt)_4$ (95%, 17.1 mmol) were added. After stirring the suspension for a minute, 1.97 g of $TiCl_4$ (10.4 mmol) was added. The 8 ounce bottle was then was placed in a 100°C oil bath and a mixture of 4.0 ml of Ethanol (3.14 g, 68 mmol) and 1.5 ml of Butanol (1.21 g, 16 mmol) was quickly added. The mixture was stirred for 90 minutes at 440 rpm where it was observed that all of the magnesium ethoxide appeared to have dissolved. The cap was removed from the bottle and the mixture stirred for ~ 90 minutes under a gentle nitrogen stream to remove Ethanol, (the volume decreased by about 7%). The resulting slurry was transferred to a glovebox and filtered warm. The solids were washed once with chlorobenzene, and then twice with hexane and sucked dry to yield about 10.15 gm of white, uniform opaque spheroids clustered about 35 μm diameter.

Procatalyst preparation:

Approximately 2.021 g of the above-prepared precursor was slurried in 20 ml of hexane, and then 4.4 ml of 4.54 M $TiCl_4$/toluene was added to obtain a yellow slurry. After stirring for 30 minutes at room temperature, the slurry was filtered. The solids were washed twice with hexane and slurried again in 20 ml of hexane. Over about a minute, 19 ml of a 25% solution of ethylaluminum chloride in toluene were added. After 15 minutes (with occasional stirring) the slurry had turned dark brown. The mixture was filtered and the solids washed twice with hexane then dried under moving nitrogen to yield 1.546 g of brown powder procatalyst. A polymerization sample was made by slurrying 0.105 g of the procatalyst in 20 ml of Kaydol oil (0.60% solids).

Slurry polymerization using the procatalyst:

A. To a one liter stainless steel reactor, containing 500 ml of hexane and 15 ml of 1-hexene, were added 590 standard cc of $H_2$ (23 psi partial pressure). Triethylaluminum (0.25 mmol of 1.56 M heptane solution) was injected by syringe. The procatalyst slurried in Kaydol oil (1.2 ml of 0.60% slurry) was injected from a 50 ml bomb using ethylene pressure and about 20 ml of hexane. After polymerizing for 30 minutes at 85°C, while adding ethylene on demand to keep the total pressure at 157 psi, the reaction was extinguished by injecting 2 ml of isopropanol. Catalyst decay rate had been 23%/20 minutes. The collected polymer was allowed to air dry overnight before characterization. The polymerization produced 117 g of polymer of 0.22 g/cc bulk density with melt index of 0.98 dg/min and flow index of 40.2 dg/min (MFR = 41). Productivity was 29.7 Kg PE/g cat/hr/100 psi.

B. A second polymerization was carried out in the same manner as the slurry polymerization described in step A above, except that the triethylaluminum was replaced by 0.364 mmol of 1.82 M heptane solution of modified methylaluminoxane (MMAO-3A from Akzo). The catalyst decay rate was about 28%/20 minutes, and the polymerization produced 111 g of polymer of 0.21 g/cc bulk density with melt index of 0.69 dg/min and flow index of 33.0 dg/min (MFR = 48).

### Example 2

Preparation of magnesium and titanium-containing precursor using borate as the clipping agent:

Reaction Stoichiometry:

$$3\ Mg(OEt)_2 + 0.42\ TiCl_4 + 0.68\ Ti(OEt)_4 + 0.078\ B(OEt)_3 + 3.58\ ROH \cdots\cdots>$$

$Mg(OEt)_2$ (8.6 g, 75 mmol) was slurried into 100 gm of decahydronaphthalene (112 ml), in an 8 ounce bottle, along with 0.27 g triethyl borate (1.87 mmol). After stirring for about one minute, 4.11 g of $Ti(OEt)_4$ (95%, 17.1 mmol) and 1.97 g of $TiCl_4$ (10.4 mmol) were added. The bottle was placed in a 100 - 110°C oil bath and stirred for 30 minutes before adding a mixture of 4.0 ml of Ethanol (3.14 g, 68.2 mmol) and 2.0 ml of Butanol (1.61 g, 21.3 mmol). The solids clumped together initially but then quickly dispersed as the granules began to dissolve to produce a homogeneous slurry. The slurry was then stirred for another hour at 540 rpm as all of the granular material appeared to have dissolved and the slurry had the appearance of a cloudy solution. The cap was removed and a gentle nitrogen flow was maintained for an hour (until 6-8% of the solvent had evaporated). The slurry was filtered warm then the solids were washed twice with hexane and dried under moving nitrogen to yield 8.05 g of white powder consisting of spheroidal, uniform sized particles.

Procatalyst preparation using the above precursor:

About 2.25 g of the above-prepared magnesium and titanium-containing procatalyst precursor was slurried into 20 ml of hexane. To this were added 9 ml of a 25% solution of diethylaluminum chloride in toluene over 3 minutes as the slurry turned to grey. After stirring for 30 minutes the slurry was filtered. The solids were washed twice with hexane and dried under moving nitrogen to produce a powder. That powder then was slurried in 20 ml of hexane, and then 9 ml of a 25% solution of ethylaluminum chloride in toluene was added over 2 minutes. The slurry turned brown. After 10 minutes with occasional stirring the mixture was filtered. The solids were washed twice with hexane, and then dried under moving nitrogen to produce 1.90 g of brown powder procatalyst. A polymerization sample was made by slurrying 0.1076 g of this procatalyst in 20 ml of Kaydol oil (0.62% solids).

Slurry polymerization:

To a one liter stainless steel reactor, containing 500 ml of hexane and 15 ml of 1-hexene, were added 676 standard cc of $H_2$ (21 psi partial pressure). Triethylaluminum (0.25 mmol of 1.56 M heptane solution) was injected by syringe. The above-prepared procatalyst (1.8 ml of 0.62% slurry of procatalyst in Kaydol oil) was injected from a 50 ml bomb using ethylene pressure and about 20 ml of hexane. After polymerizing for 30 minutes at 85°C, while adding ethylene on demand to keep the total pressure at 156 psi, the reaction was extinguished by injecting 2 ml of isopropanol. The catalyst decay rate had been 41%/20 minutes. The collected polymer was allowed to air dry overnight before characterization. The polymerization produced about 203 g of polymer of 0.25 g/cc bulk density with melt index ($I_2$) of 1.69 dg/min and flow index ($I_{21}$) of 62.4 dg/min (MFR = 37). Productivity was 50.2 Kg PE/g cat/hr/100 psi.

### Example 3

Preparation of magnesium and titanium-containing precursor using calcium carbonate as the clipping agent:

Reaction Stoichiometry:

$$3.0\ Mg(OEt)_2 + 0.42\ TiCl_4 + 0.68\ Ti(OEt)_4 + 0.24\ CaCO_3 + 3.4\ ROH \cdots\cdots>$$

$Mg(OEt)_2$ (8.58 g, 75 mmol) and $CaCO_3$ (0.6 g, 6 mmol) were slurried into 100 gm of chlorobenzene (90 ml), in an 8 ounce bottle then $Ti(OEt)_4$ (4.11 g, 95%, 17.1 mmol) was added. After about a minute, $TiCl_4$ (1.97 g, 10.4 mmol) was added to the stirring slurry. The bottle was placed in a 100° oil bath then a mixture of Ethanol (4.0 ml, 3.14 g, 68 mmol) and Butanol (1.5 ml, 1.21 g, 16 mmol) was quickly added. The mixture was stirred for 3.5 hours at 440 rpm to form a cloudy suspension which no longer contained granules of starting material. The cap was removed and stirring continued under a gentle nitrogen stream until the volume had decreased by about 7% as excess alcohol was removed. The resulting slurry was transferred to a glovebox and filtered warm. The solids were washed once with chlorobenzene then twice with hexane and dried under moving nitrogen to yield 11.0 g of white powder consisting of 20 - 35μ, nearly spheroidal, opaque particles.

**Example 4**

Preparation of magnesium and titanium-containing precursor using magnesium bromide as the clipping agent:

In a 16 oz jar were placed 14.9 g of $Mg(OEt)_2$ (130 mmol) and 3.54 g of $MgBr_2 \cdot 4EtOH$ (9.6 mmol), then 185 g of chlorobenzene, 6.62 g of $Ti(OEt)_4$ (95%, 27.6 mmol), 4.43 g of $TiCl_4$ (23.4 mmol) and 11 g of ethanol (239 mmol) were added. The mixture was transferred to a 93°C oil bath and stirred for two hours. The top was then removed and a gentle stream of nitrogen passed over the stirring slurry for an hour, during which time 20 g of material had evaporated. The slurry was filtered hot, and then the solids washed once with warm chlorobenzene, twice with isooctane and dried under moving nitrogen to yield 15.2 g of dense (packed bulk density = 0.621 g/cc) white granular precursor material. Microscopic examination revealed well shaped particles in the 30- 50 μm range with few fines.

Propylene polymerization procatalyst preparation:

Procatalyst A was prepared essentially according to the procedure of Example 4 from United States Patent No. 4,535,068, except that the above-prepared magnesium and titanium-containing precursor was used as the procatalyst precursor. A polymerization sample was prepared by slurrying 1 g of procatalyst A with 20 ml of Kaydol mineral oil.

Polymerization in liquid propylene:

Liquid propylene (1370 g) and 132 mmol of hydrogen (132 mmol) were heated to 60° in a one gallon stainless steel autoclave, equipped with agitator, under sufficient pressure to maintain liquid phase. To the stirring reactor were added in succession: 0.70 mmol of triethylaluminum (as a 5% solution in isooctane), 0.35 ml of ethyl-p-ethoxybenzoate and sufficient mineral oil slurry of procatalyst A to contain 0.01 mmol of titanium. After stirring the mixture at 67° for one hour, the reactor was vented and the solid polypropylene recovered and allowed to dry overnight. After weighing the polymer produced, the productivity was determined to be 21.4 Kg PP/gcat/hr (average of three runs). The xylene solubles content of the polymer averaged 4.43% and the bulk density averaged 0.333 g/cc.

Comparative Example 1

Preparation of magnesium and titanium-containing precursor using o-cresol as the clipping agent:

Reaction Stoichiomety:

$$3 \ Mg(OEt)_2 + 0.42 \ TiCl_4 + 0.68 \ Ti(OEt)_4 + 0.15 \ o\text{-}CH3C6H4OH + 3.7 \ ROH \ \cdots\cdots>$$

The precursor was formed by first slurrying $Mg(OEt)_2$ (8.6 g, 75 mmol) into 100 gm of chlorobenzene (90 ml) in an 8 ounce bottle. About 0.40 g o-cresol (3.75 mmol) then was added, and after stirring for a minute, 4.11 g of Ti $(OEt)_4$ (95%, 17.1 mmol) and 1.97 g of $TiCl_4$ (10.4 mmol) were added. The bottle was placed in a 100°C oil bath, and then a mixture of 4.5 ml of Ethanol (3.53 g, 76.6 mmol) and 1-5 ml of Butanol (1.21 g, 16 mmol) was quickly added. After stirring for 95 minutes at 440 rpm, the reaction appeared as a slightly cloudy translucent slurry with only a few granules of starting material remaining. The cap was removed and a gentle stream of nitrogen was passed for an hour (the liquid volume had decreased by -7%). The slurry was transferred to a glovebox and filtered warm. The solids were washed once with chlorobenzene then twice with hexane and dried under moving nitrogen to yield 10.8 g of off-white powder consisting mostly of 35 μm spheroids with a small group of 15 μm particles.

Polymerization promtalyst using precursor of Comparative Example 1 (procatalyst **B**):

Procatalyst **B** was prepared from the above magnesium and titanium-containing precursor essentially according to the procedure of Example 4 from US 4,535,068. A polymerization sample was prepared by slurrying 1 g of procatalyst B with 20 ml of Kaydol mineral oil.

Polymerization in liquid propylene:

Propylene polymerization was carried out according to example 5 above. The productivity of procatalyst B was determined to be 19.3 Kg PP/g cat/hr (average of 4 runs). The xylene solubles content of the polymer averaged 4.85% and the bulk density averaged 0.300g/cc.

As can be seen from the above examples, magnesium and titanium-containing precursors prepared using the inventive clipping agents have higher activity than precursors prepared using the conventional phenol-containing clipping agents. In addition, if a borate ester is used as a clipping agent, significantly less borate is required to form the inventive precursors. The borate clipper has the further advantage of allowing the use of a less polar solvent (decahydronaphthalene *vs* chlorobenzene).

The inventive examples also provide procatalyst precursors having improved morphology and fewer fines which enables the production of polymers having a higher bulk density, less fines and a lower xylene solubles content. In addition, the precursors of the present invention were effective in preparing procatalysts that polymerize ethylene and propylene in high yield.

## Claims

1. A method of making an olefin polymerisation procatalyst precursor comprising:

   contacting a magnesium alkoxide and a titanium alkoxide in the presence of an alcohol and a clipping agent selected from the group consisting of HCHO, $CO_2$, $B(OEt)_3$, $SO_2$, $Al(OEt)_3$, $Si(OR)_4$, $R'Si(OR)_3$, $P(OR)_3$, and compounds comprising an anion corresponding to the formula, $CO_3^=$, $Br^-$, or $(O_2COEt)^-$, said R and R' each independently representing a hydrocarbyl group having from 1-10 carbon atoms, in an amount less than that required to completely dissolve the magnesium alkoxide, said amount being from 0.01 to 0.15 moles per mole of magnesium alkoxide, and
   separating the resulting compound from the slurry.

2. The method as claimed in Claim 1, wherein the magnesium alkoxide is magnesium diethoxide, the titanium alkoxide is titanium tetraethoxide, and the alcohol is ethanol.

3. The method as claimed in Claim 1, wherein the amount of titanium alkoxide is from 0.2 mole to 0.5 mole per mole of magnesium alkoxide.

## Patentansprüche

1. Verfahren zur Herstellung eines Olefinpolymerisationsprokatalysatorvorläufers, umfassend:

   In-Berührung-Bringen eines Magnesiumalkoxids und eines Titanalkoxids in Gegenwart eines Alkohols und eines Unterdrückungsmittels, ausgewählt aus der Gruppe bestehend aus HCHO, $CO_2$, $B(OEt)_3$, $SO_2$, $Al(OEt)_3$, $Si(OR)_4$, $R'Si(OR)_3$, $P(OR)_3$ und Verbindungen, die ein Anion entsprechend der Formel $CO_3^=$, $Br^-$ oder $(O_2COEt)^-$ enthalten, wobei dieses R und R' jeweils unabhängig voneinander eine Hydrocarbylgruppe mit 1-10 Kohlenstoffatomen darstellen, in einer Menge, die kleiner ist als die, die benötigt wird, um das Magnesiumalkoxid vollständig zu lösen, wobei diese Menge von 0,01 bis 0,15 mol pro mol Magnesiumalkoxid reicht, und Abtrennen der resultierenden Verbindung von der Aufschlämmung.

2. Verfahren wie in Anspruch 1 beansprucht, wobei das Magnesiumalkoxid Magnesiumdiethoxid ist, das Titanalkoxid Titantetraethoxid ist und der Alkohol Ethanol ist.

3. Verfahren wie in Anspruch 1 beansprucht, wobei die Menge von Titanalkoxid 0,2 bis 0,5 mol pro mol Magnesiumalkoxid beträgt.

**Revendications**

1. Procédé de préparation d'un précurseur de procatalyseur de polymérisation d'oléfine comprenant :

   la mise en contact d'un alcoxyde de magnésium et d'un alcoxyde de titane en présence d'un alcool et d'un agent de fixation choisi dans le groupe constitué des composés HCHO, $CO_2$, $B(OEt)_3$, $SO_2$, $Al(OEt)_3$, $Si(OR)_4$, $R'Si(OR)_3$, $P(OR)_3$, et les composés comprenant un anion correspondant à la formule, $CO_3^-$, $Br^-$, ou $(O_2COEt)^-$, lesdits radicaux R et R' représentant chacun indépendamment un groupe hydrocarbyle ayant de 1 à 10 atomes de carbone, dans une quantité inférieure à celle requise pour complètement: dissoudre l'alcoxyde de magnésium, ladite quantité étant de 0,01 à 0,15 moles par mole d'alcoxyde de magnésium, et
   la séparation du composé résultant de la suspension.

2. Procédé selon la revendication 1, dans lequel l'alcoxyde de magnésium est du diéthoxyde de magnésium, l'alcoxyde de titane est du tétraéthoxyde de titane, et l'alcool est de l'éthanol.

3. Procédé selon la revendication 1, dans lequel la quantité d'alcoxyde de titane est de 0,2 mole à 0,5 mole par mole d'alcoxyde de magnésium.